# EUROPEAN PATENT APPLICATION

(11) **EP 4 206 886 A1**
(43) Date of publication of application: **05.07.2023**
(21) Application number: 22189430.6
(22) Date of filing: 09.08.2022
(51) Int. Cl.: G06F 3/04817

(54) **METHOD AND APPARATUS FOR DISPLAYING AN INTERFACE FOR EMOJI INPUT**

(30) Priority: 30.12.2021 CN 202111656648
(71) Applicant: Beijing Dajia Internet Information Technology Co., Ltd., Beijing 100085 (CN)
(72) Inventor: HAN, Bing, Beijing, 100085 (CN); LI, Xinyi, Beijing, 100085 (CN)
(74) Representative: Yang, Shu

(57) **Abstract**

A method for displaying an interface includes displaying (S10) first emoji information on an information display interface; and presenting (S20) a second emoji on the information display interface in response to the first emoji information being displayed on the information display interface and second emoji information being acquired. The first emoji information includes an image and/or a description corresponding to a first emoji, and the second emoji information includes an image and/or a description corresponding to the second emoji.

## Description

### TECHNICAL FIELD

The present disclosure relates to the field of Internet technologies, and in particular, relates to a method and an apparatus for displaying an interface, and a storage medium.

### BACKGROUND

With the development of computer technologies, people can communicate through various applications of computer software. Some application can support communication forms such as texts, pictures, and emojis.

### SUMMARY

The present disclosure provides a method and an apparatus for displaying an interface, and a storage medium. The technical solution of the present disclosure is as follows.

According to an aspect of embodiments of the present disclosure, a method for displaying an interface is provided. The method includes:
displaying first emoji information on an information display interface, wherein the first emoji information includes an image and/or description corresponding to a first emoji; and
presenting a second emoji on the information display interface in the case that the first emoji information is displayed on the information display interface and second emoji information is acquired, wherein the second emoji information includes an image and/or a description corresponding to the second emoji.

In some embodiments, the information display interface is a comment interface of a media resource, and said presenting the second emoji on the information display interface includes: presenting the second emoji in the case that the first emoji information is displayed on the information display interface and one or more comments displayed on the comment interface of the media resource includes second emoji; or
the information display interface is an instant messaging interface, and said presenting the second emoji on the information display interface includes: presenting the second emoji in the case that the first emoji information and the second emoji information is displayed on the instant messaging interface.

In some embodiments, the method further includes:
presenting first target interaction information on the information display interface, wherein the first target interaction information describes an interaction effect between the first emoji and the second emoji.

In some embodiments, each of the first emoji and the second emoji is an emoji in a first emoji set, the first emoji set is corresponding to a target scenario, and the first target interaction information describes the interaction effect between the first emoji and the second emoji in the target scenario;
the first emoji set includes a second emoji set, a combination formed by any two emojis from the second emoji set has corresponding interaction information, and the method further includes: determining, in the case that each of the first emoji and the second emoji is an emoji in the second emoji set, interaction information corresponding to a combination of the first emoji and the second emoji as the first target interaction information; or
the first emoji set includes a third emoji set, a combination formed by any two emojis from the third emoji set according to a display order having corresponding interaction information, and the method further includes: determining, in the case that each of the first emoji and the second emoji is an emoji in the third emoji set and the first emoji information and the second emoji information are sent by different clients, interaction information corresponding to a combination formed by the first emoji and the second emoji according to the display order as the first target interaction information.

In some embodiments, the first emoji set comprises a second emoji set, a combination formed by any two emojis from the second emoji set having corresponding interaction information, and the method further includes:
determining, in the case that each of the first emoji and the second emoji is an emoji in the second emoji set and the first emoji information and the second emoji information are sent from different clients, the first target interaction information based on the first emoji and the second emoji.

In some embodiments, the method further includes:
presenting an effect of the first emoji in response to receiving the first emoji information; and
presenting an effect of the second emoji in response to receiving the second emoji information.

In some embodiments, said presenting the first target interaction information on the information display interface includes:
presenting the first target interaction information on the information display interface in the case that the second emoji information is displayed in an emoji input region of the information display interface but the second emoji information is not sent.

In some embodiments, the method further includes:
displaying the information display interface; and
in the case that emoji information in a session corresponding to the information display interface forms interaction information within a time period where the information display interface is not displayed, presenting the interaction information formed within the time period.

In some embodiments, said presenting the interaction information formed within the time period including:
presenting the interaction information sequentially according to generation time points of the interaction information in the case that an amount of the interaction information is less than a first amount; and
determining the first amount of the interaction information according to the generation time points of the interaction information in the case that the amount of the interaction information is greater than or equal to the first amount and presenting the first amount of the interaction information sequentially.

In some embodiments, the method further includes:
displaying third emoji information in the case that the second emoji information is displayed;
in the case that second target interaction information is determined based on the second emoji information and the third emoji information and the first target interaction information is not presented completely, storing the first target interaction information and the second target interaction information in a successive interaction information sequence sequentially according to a time sequence; and
presenting interaction information in the successive interaction information sequence sequentially.

In some embodiments, the method further includes:
in the case that new emoji information is not received within a previous target time period, and the successive interaction information sequence includes more than a second quantity of interaction information, presenting the second quantity of interaction information stored in the successive interaction information sequence sequentially.

In some embodiments, the method further includes:
displaying the information display interface, the information display interface including an emoji select control;
displaying a target element on the emoji select control, the target element being configured to prompt presence of the target scenario; and
   displaying a first emoji presentation region for displaying the first emoji set in response to a trigger instruction on the emoji select control; and/or displaying the information display interface not including the target element in response to a request for displaying the information display interface again in the case that the information display interface is closed.

In some embodiments, the method further includes:
displaying a second emoji presentation region for displaying the second emoji set in response to a trigger instruction on the emoji select control.

According to another aspect of the embodiments of the present disclosure, an apparatus for displaying an interface is provided. The apparatus includes:
a first emoji display module, configured to display first emoji information on an information display interface, wherein the first emoji information comprises an image and/or a description corresponding to a first emoji; and
a second emoji display module, configured to present a second emoji on the information display interface in the case that the first emoji information is displayed on the information display interface and second emoji information is acquired, wherein the second emoji information comprises an image and/or a description corresponding to the second emoji.

According to still another aspect of the embodiments of the present disclosure, a non-transitory computer-readable storage medium storing one or more instructions therein is provided, wherein the one or more instructions, when loaded and executed t by a processor of an electronic device, causes the electronic device to perform:
displaying first emoji information on an information display interface, wherein the first emoji information comprises an image and/or a description corresponding to a first emoji; and
presenting a second emoji on the information display interface in the case that the first emoji information is displayed on the information display interface and second emoji information is acquired, wherein the second emoji information comprises an image and/or a description corresponding to the second emoji.

### BRIEF DESCRIPTION OF THE DRAWINGS

FIG. 1 is a schematic diagram of an implementation environment of a method for displaying an interface according to an exemplary embodiment of the present disclosure;
FIG. 2 is a flowchart of a method for displaying an interface according to an exemplary embodiment of the present disclosure;
FIG. 3 is a schematic diagram of displaying emoji information in a comment scenario according to an exemplary embodiment of the present disclosure;
FIG. 4 is a schematic diagram of an information display interface according to an exemplary embodiment of the present disclosure;
FIG. 5 is a schematic diagram of presenting first target interaction information according to an exemplary embodiment of the present disclosure;
FIG. 6 is another schematic diagram of presenting the first target interaction information presentation according to an exemplary embodiment of the present disclosure;
FIG. 7 is a schematic diagram of another information display interface according to an exemplary embodiment of the present disclosure;
FIG. 8 is a block diagram of an apparatus for displaying an interface according to an exemplary embodiment of the present disclosure; and
FIG. 9 is a block diagram of an electronic device according to an exemplary embodiment of the present disclosure.

### DETAILED DESCRIPTION

The access user information and information related user accounts, including social relationship and identity information and the like, described in the embodiments of the present disclosure have been authorized by the user, and the methods, apparatuses, devices, and storage media involved in the present disclosure can access the information related to the user under the premise of obtaining the authorization of the user's permission.

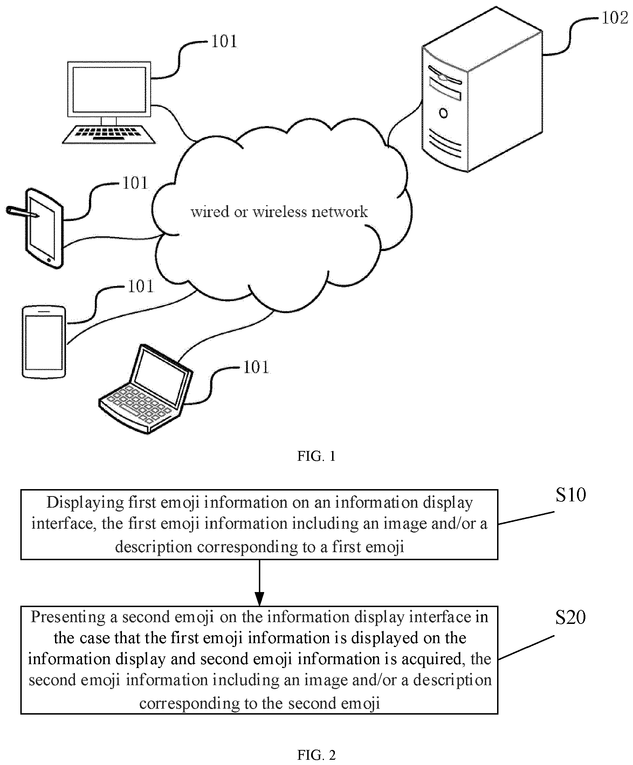

FIG. 1 is a schematic diagram of an implementation environment of a method for displaying an interface according to an exemplary embodiment. By taking the electronic device provided as a terminal as an example, referring to FIG. 1, the implementation environment includes a terminal 101 and a server 102.

The terminal 101 is at least one of a smart phone, a smart watch, a desktop computer, a laptop computer, and a laptop portable computer, and other devices. An application program for providing communication interaction is installed and operate on the terminal 101, and the user may log in to the application program through the terminal 101 to acquire a communication interaction service provided by the application program. The terminal 101 may generally refer to one of a plurality of terminals, and the embodiment only takes the terminal 101 as an example for illustration. Those skilled in the art may know that the quantity of the above terminals may be more or less. For example, there may be only a few terminals, or there may be dozens or hundreds, or more terminals, and the embodiments of the present disclosure do not limit the quantity of the terminals and device types.

The server 102 is at least one of a server, multiple servers, a cloud computing platform and a virtualization center. The server 102 is connected to the terminal 101 and other terminals through a wireless network or a wired network, the terminal 101 sends emoji and present the emoji, and the server 102 receives the emoji sent by the terminal 101 and send the received emoji to other terminals. Optionally, the quantity of the above servers may be more or less, which is not limited in the embodiments of the present disclosure. The server 102 may also include other functions to provide more comprehensive and diversified services.

FIG. 2 is a flowchart of a method for displaying an interface according to an exemplary embodiment. As shown in FIG. 2, the method is performed by an electronic device, the electronic device being provided as the terminal 101 or the server 102. Alternatively, the above electronic device includes the terminal 101 and the server 102. The method includes the following processes S10 and S20.

In S10, first emoji information is displayed on an information display interface, and the first emoji information includes an image and/or a description corresponding to a first emoji.

The emoji information in the embodiment of the present disclosure is represented by a corresponding emoji image or emoji description. The emoji description may include text such as words and a character string corresponding to the emoji. For example, the emoji information of smile may be represented by a smile image or a corresponding text description such as words "smile" and/or "laugh", and a "smile" character string. That is, the emoji information corresponding to the smile emoji may include the smile image (emoji) and description corresponding to smile.

The image and/or the description corresponding to the first emoji is displayed on the information display interface. By taking the smile emoji as an example, the smile image, text corresponding to smile, and/or "smile" character string may be displayed.

In S20, in the case that the first emoji information is displayed on the information display interface and the second emoji information is acquired, a second emoji is presented on the information display interface, and the second emoji information includes an image and/or a description corresponding to the second emoji. That is, in response to the first emoji information being displayed and the second emoji information being acquired, the second emoji is presented on the information display interface.

The second emoji information is emoji information after the first emoji information is received, and these two pieces of emoji information are two pieces of adjacent emoji information successively received on the information display interface.

The above S20 is performed in the case that the display of the first emoji is completed and the latest second emoji is acquired. In some embodiments, the information display interface is an instant messaging interface, the process S20 is performed after the first emoji has been displayed in the instant messaging interface, and then a second emoji sent by a client different from the electronic device in the instant messaging interface is acquired. In some embodiments, the information display interface is a comment interface of a media resource, and the process S20 is executed after a comment carrying a first emoji has been posted in the commenting interface and a comment carrying a second emoji information posted in the comment interface by an electronic device different from the electronic device is acquired.

It should be understood that the second emoji shows an effect brought by the second emoji, and the manners of presenting the second emoji are not limited. For example, the second emoji may be presented in an animation manner, a static picture manner, or may be presented in conjunction with a sound, and the like. For example, presenting the second emoji includes displaying a still image or animation corresponding to the second emoji information. For example, the second emoji information is an image, and the effect of the second emoji is the image itself, or an enlarged image of the image, or an animation corresponding to the image, etc. Alternatively, the second emoji information is a description, and the effect of the second emoji is an image corresponding to the description.

Communications through text, pictures, emojis and other forms of communication via software applications has been developed. However, in the related art, the forms of communication/presentation using the emoji information are simple and lack in variety, and the interface display channels and scenarios are relatively limited.

The method for displaying an interface according to the embodiment of the present disclosure can trigger the presentation of the second emoji based on the second emoji information such as description related to the second emoji or an image. That is, the second emoji can be presented in the case that the second emoji information includes an image, and the second emoji can also be presented in the case that the second emoji information includes description. In this way, the second emoji can be caused to be displayed at different scenarios, which enriches the manners of emoji presentation and improves user stickiness.

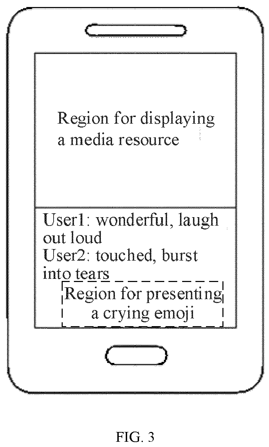

The information display interface is not limited in the embodiments of the present disclosure. In some embodiments, the information display interface is a comment interface of a media resource. Displaying the first emoji information on the information display interface includes: displaying the first emoji information (i.e., the description corresponding to the first emoji) on the comment interface of the media resource. Presenting the second emoji on the information display interface in response to the first emoji information being displayed on the display interface and the second emoji information being acquired includes: presenting the second emoji in response to one or more comments displayed on the comment interface of the media resource including the second emoji information (i.e., the description corresponding to the second emoji). Referring to FIG. 3, FIG. 3 shows a schematic diagram of displaying the emoji where the information display interface is a comment interface of a media resource. In the comments, the description "laugh" corresponding to the first emoji from User 1 is displayed. When User 2 made a comment "touched, burst into tears", a second emoji "a crying emoji" is displayed in the region for presenting an emoji in response to the comment of User 2. That is, the second emoji is presented based on the second emoji information. The embodiment of the present disclosure does not limit whether the description corresponding to the first emoji and the description corresponding to the second emoji belong to one comment, and does not limit whether there is an association relationship between different comments either in the case that the descriptions belong to different comments as long as the comments are for one media resource. The method for displaying an interface according to the embodiment of the present disclosure can be implemented in a media resource comment scenario, thereby expanding an implementation scenario, increasing interaction interest of the comments, and improving the user stickiness.

In some embodiments, the images and descriptions corresponding to a plurality of emojis are determined. In some embodiments, when the comments posted in the comment interface is acquired, the comments may include emoji information. For example, the emoji information in the comments is recognized based on the database, and some descriptions/statement in the comments may be recognized to have corresponding emojis. For examples, words expressing feel may have corresponding emojis, words relevant to certain seasonal events such as Christmas, New Year, Spring Festival may have corresponding emojis. The method of the present disclosure determines the emojis based on the recognized emoji information.

In another embodiment, the information display interface is an instant messaging interface. Displaying the first emoji information on the information displaying interface includes: displaying the first emoji information (i.e., the image corresponding to the first emoji) on the instant messaging interface. Presenting the second emoji on the information display interface in the case that the first emoji information is displayed on the information display interface and the second emoji information is acquired includes: presenting the second emoji in the case that the first emoji information and the second emoji information are displayed on the instant messaging interface. In some embodiments, the first emoji is displayed in the instant messaging interface first and then the second emoji is displayed later, and the later dsiplayed second emoji can be presented in the form of animation, still pictures, and in conjunction with sound. The embodiment of the present disclosure does not limit the instant messaging interface. For example, the instant messaging interface may be a private message interface or a public community interaction interface, a single chat interface or a group chat interface. The embodiment of the present disclosure may be implemented in various communication interfaces, so as to have a wide range of usage scenarios.

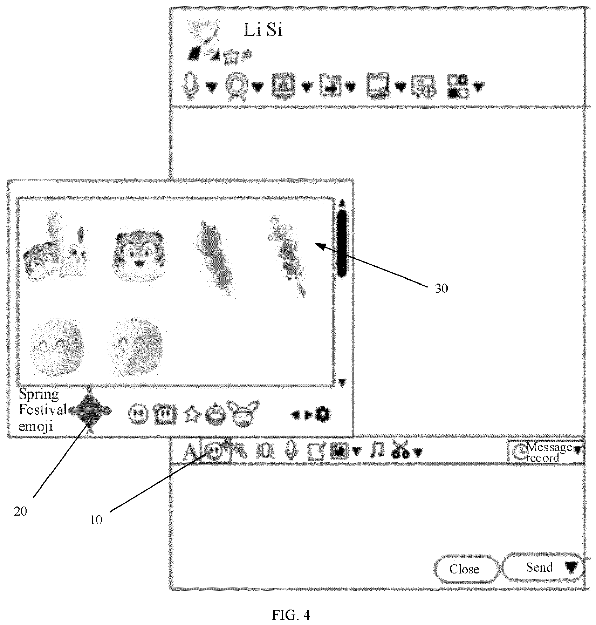

Taking the electronic device being provided as the terminal 101 described above as an example, referring to FIG. 4, FIG. 4 shows a schematic diagram of an information display interface in the terminal 101. When the information display interface is entered for the first time under a target scenario, the information display interface in FIG. 4 may be displayed, and the above S10 may be implemented based on the information display interface. The embodiment of the present disclosure does not limit the target scenario. For example, the target scenario may be a scenario of a certain event or a scenario corresponding to a certain special period. For example, the target scenario may be a scenario corresponding to a festival, a scenario corresponding to the sports meeting or a scenario corresponding to a festival. The festival includes Spring Festival, Christmas, Thanksgiving, etc. In the target scenario, the information display interface is displayed, the information display interface includes an emoji select control 10, a target element 20 is displayed on the emoji select control 10, and the target element 20 is configured to prompt presence of the target scenario. In FIG. 4, the target element 20 located on the emoji select control 10 indicates the existence of the emoji display interface corresponding to the Spring Festival scenario. The embodiment of the present disclosure does not limit a carrier of the target element. For example, the target present element may be presented in a form of an icon representing the target scenario. In the illustrated example in FIG. 4, the icon is Chinese knotting representing the Spring Festival. In some embodiments, an additional expression may also be added to the target element, for example, adding a dynamic effect of breathing to the target element. The embodiment of the present disclosure improves an integrating degree between the information display interface and the target scenario by performing targeted information display interface display on the target scenario, and meets the needs of people for emoji interaction in the target scenario.

In the embodiment of the present disclosure, the first target interaction information may be presented on the information display interface, and the first target interaction information describes an interaction effect between the first emoji and the second emoji. In the embodiment of the present disclosure, the first target interaction information describes interaction information formed between two adjacent emoji. The first target interaction information describes animation interaction effects, audio interaction effects, and the like. The embodiment of the present disclosure does not limit the first target interaction information. By focusing on adjacent emoji and presenting corresponding interaction information, the ability of expressing related information via the emojis is improved, and the interaction interest is also improved, thereby increasing the user stickiness. Through the presentation of multi-dimensional effects, an expression effect of the interaction information can be improved.

In some embodiments, the information display interface is an instant messaging interface, and the first emoji information and the second emoji information are adjacent emoji information in the instant messaging interface. By presenting the first target interaction message, it is possible to display two emoji information in succession in the case that the interaction information corresponding to the two emoji information is presented. In the session corresponding to the instant messaging interface, one or more users can send emoji information, thus it is possible to combine two adjacent emoji information to form a new interactive information for the users in the session to watch or listen to. The newly formed interaction information provides a new presentation method and is equivalent to providing a new game for users to play in the instant messaging interface, and can become more attractive to the users.

In some other embodiments, the information display interface is the comment interface of the media resource, and the first emoji information and the second emoji information are the adjacent emoji information in the commenting interface. In the case that the two emoji information are continuously displayed, by presenting the first target interaction information, the interaction information corresponding to the two emoji information can be presented. For example, any one or more users can post comments carrying emoji in the comment interface, the two adjacent emoji are combined to form a new interactive information for users. The newly formed interactive information provides a new presentation method, which is equivalent to providing a new game for users to play in the commenting interface such that the interaction becomes more fun to attract users to comment on media resources through emoji.

In some embodiments, each of the first emoji and the second emoji is an emoji in a first emoji set, the first emoji set is an emoji set corresponding to the target scenario, and the first target interaction information describes the interaction effect between the first emoji and the second emoji in the target scenario. By improving the integrating degree between the interaction information and the target scenario, the atmosphere corresponding to the target scenario is further enhanced, and user experience is improved.

The first emoji set in the embodiment of the present disclosure includes a second emoji set. The second emoji set is an emoji set in which the combination formed by any two emojis has corresponding interaction information without considering the display order of the two emojis. In the case that each of the first emoji and the second emoji is an emoji in the second emoji set, the interaction information corresponding to a combination of the first emoji and the second emoji is determined as the first target interaction information. In the embodiment of the present disclosure, the combination formed by the emoji in the second emoji set does not consider the sequence of elements in the combination. For example, one combination may be expressed as {element a, element b}, another combination may be expressed as {element b, element a}, and these two combination are considered to be the same combination in the first emoji set.

By taking the first emoji set for the Spring Festival scenario as an example, the first emoji set including four emojis is provided for the user: tiger, firecrackers, candied haws on a stick and dumplings. Because of the existence of corresponding interaction information, these four emojis form a second emoji set. That is, the second emoji set includes four emojis, and the four emojis may form a plurality of combinations, and each combination of the plurality of combinations has corresponding interaction information. Specifically, the interaction information corresponding to the combination formed by the tiger emoji and the firecracker emoji may be described as a scenario where the tiger lights the firecrackers and then squats with its ears covered, with the sound and vibration of the firecrackers and red firecrackers flying all over the sky. The interaction information corresponding to the combination formed by the tiger emoji and the emoji of candied haws on a stick may be described as a scenario where the tiger holds candied haws on a stick to go to a temple fair. The interaction information corresponding to the combination formed by the tiger emoji and the dumpling emoji may be described as a scenario where the tiger wears a Tang suit, walks in a circle on roller skates, and delivers a plate of dumplings. The interaction information corresponding to the combination formed by the firecracker emoji and the dumpling emoji may be described as a scenario that the firecrackers blast the dumplings, which are full of money and luck, with firecracker sound and vibration feedback. The interaction information corresponding to the combination formed by the firecracker emoji and the emoji of candied haws on a stick may be described as a scenario that the firecrackers and the candied haws on a stick turn into two persons and play in circles. The interaction information corresponding to the combination formed by the firecracker emoji and the emoji of candied haws on a stick may be described as a scenario that the candied haws on a stick and the dumplings are placed in a pot for cooking, and red syrup flows out of a screen.

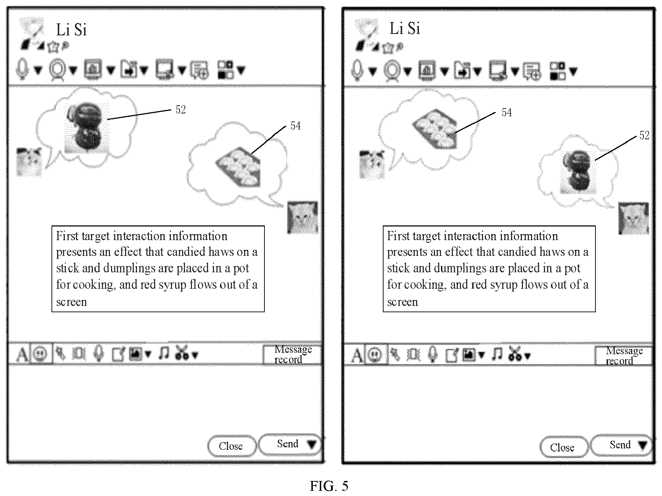

Referring to FIG. 5, FIG. 5 shows a schematic diagram of presenting the first target interaction information. In the left screen of FIG. 5, the first emoji is the candied haws on a stick 52, and the second emoji is the dumplings 54, and the display region of the screen presents that the following scene and dynamic effect/animation: the candied haws on a stick and the dumplings are cooking in a pot, and the red syrup appears to flow out of the screen. The right screen of FIG. 5 shows that the first emoji is the dumplings 54, the second emoji is the candied haws on a stick 52, and the same interaction effect is generated. That is, the interaction effects are the same no matter first emoji or the second emoji is displayed first. By combining any two emojis in the second emoji set to form the corresponding interaction information, dynamic effects for the target scenario are provided to the user, which enhances the atmosphere of the target scenario, adds more approaches to express the target scenario, and enrich the information expressed by the emoji.

It should be noted that the emoji in the embodiment of the present disclosure may be represented by emoji information. For example, each emoji information is an image and/or a description, and each emoji information represents an emoji, and the set of emoji includes emoji information, which is equivalent to including emoji in the set of emoji. The need to present the emoji represented by the emoji information in the information display interface can be determined when the information display interface includes the emoji information. Furthermore, each emoji has a unique emoji identifier and emoji information. The emoji identifier corresponding to any two emojis are associated with the target interaction information to indicate that the target interaction information is the interaction information corresponding to the two emojis. Or the emoji information corresponding to any two emojis are associated with the target interaction information to indicate that the target interaction information is the interaction information corresponding to the two emojis.

The embodiment of the present disclosure does not limit sources of the first emoji information and the second emoji information. For example, an electronic device is provided as the terminal 101, the first emoji may be sent from other clients, and the second emoji may be input in the terminal 101; or the first emoji and the second emoji are sent from different clients of different terminals 101; or the first emoji and the second emoji are sent from the same client of different terminals 101. As long as the first emoji information and the second emoji information can be received by the terminal 101, the corresponding interaction information can be presented in the terminal 101.

In one example, a user can use one client to send two consecutive emojis in the instant messaging interface, so as to present the target interaction information corresponding to the two emojis. In another example, one user uses one client to send emoji in the instant messaging interface, and another user uses another client to send emoji in the instant messaging interface, so as to present the target interaction message corresponding to the two successive emoji in the instant messaging interface. Alternatively, in the case that emoji has been sent in an instant messaging interface, the local user enters emoji information in the local client. At this point, although the emoji information has not been sent out by the local user, the target interaction information corresponding to the emoji represented by the emoji information and the previously sent emoji can still be presented in the instant messaging interface, such that the local user can preview the target interaction information to decide whether to send the emoji information.

In some embodiments, the first emoji set includes a third emoji set. In the third emoji set, any two emojis are combined according to a display order and has corresponding interaction information. In the case that each of the first emoji and the second emoji is an emoji in the third emoji set, and the first emoji information and the second emoji information are sent by different clients, the interaction information corresponding to the combination formed by the first emoji and the second emoji according to the display order is determined as the first target interaction information. In the third emoji set, the combination is an ordered combination according to the display order, and the ordered combination considers the sequence of elements in the combination. For example, one ordered combination may be expressed as {element c, element d}, another ordered combination may be expressed as {element d, element c}, and then these ordered combinations are not the same combination in the third emoji set although both combinations contain the same elements.

By taking the first emoji set for the Spring Festival scenario as an example of the first emoji set, three emoji of tiger, stick and chicken may be provided for the user, and these three emojis can be emojis in the third emoji set. The three emoji may form a plurality of ordered combinations, and each ordered combination in the plurality of ordered combinations has corresponding interaction information thereof. Specifically, the interaction information corresponding to the ordered combination formed by the tiger emoji and the stick emoji may be described as a scenario that the tiger plays with a toy, and a stick suddenly comes, making the tiger dizzy. The interaction information corresponding to the ordered combination formed by the tiger emoji and the chicken emoji may be described as a scenario that the tiger and the chicken fight, and the chicken is beaten and cries with black and swollen eyes and wronged look. The interaction information corresponding to the ordered combination formed by the chicken emoji and the stick emoji may be described as a scenario that a cute chick jumps out and pecks the stick away with a coo gurgling dynamic effect. The interaction information corresponding to the ordered combination formed by the tiger emoji may be described as a scenario that two tigers walk over from both sides, high-fives and jump, and roar happily. The interaction information corresponding to the ordered combination formed by the stick emoji may be described as a scenario that the sticks fight back and forth like weapons with a sound and end with a draw. The interaction information corresponding to the ordered combination formed by the chicken emoji may be described as a scenario that two chickens wave their fists at each other, one chicken uses Bruce Lee's signature Kung fu move, and the other chicken moves claws, starts fighting, and finally gets tired, sweaty and panting with the fighting being tied.

Obviously, the effect presented by the first emoji as the chicken emoji and the second emoji as the tiger emoji is different from the effect presented by the first emoji as the tiger emoji and the second emoji as the chicken emoji. That is, a receiving order of the emoji has an impact on the interaction effect, which also differs from the presentation effect of the emoji in the third emoji set and the emoji in the second emoji set. The embodiment of the present disclosure can provide the user with more dynamic effects for the target scenario by orderly combining any two emojis in the third emoji set to form corresponding interaction information, enhance the atmosphere of the target scenario, increase the expressive force for the target scenario and enrich the information that can be expressed by the emoji.

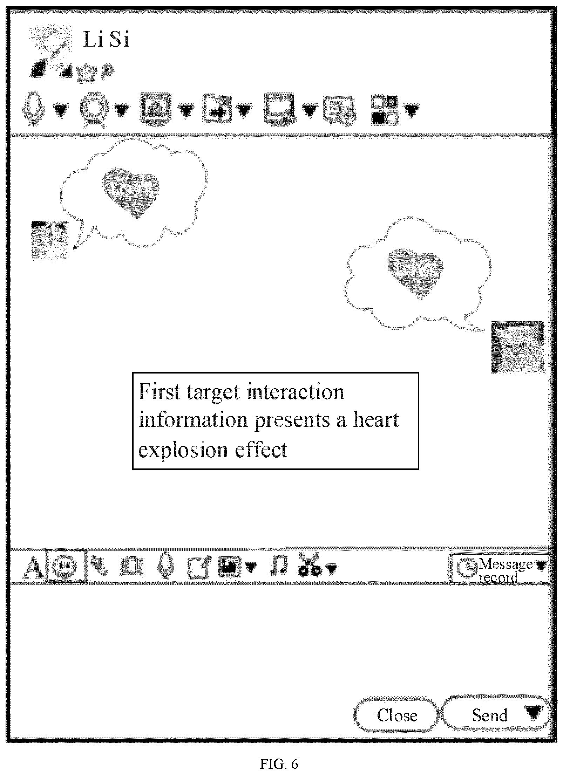

In some embodiments, in the case that each of the first emoji and the second emoji is an emoji in the second emoji set and the first emoji information and second emoji information are sent from different clients, based on the first emoji information and the second emoji information, the first target interaction information is determined. The emojis in the second emoji set are emojis corresponding to various scenarios. The second emoji set having been described in the embodiment of the present disclosure, and will not be repeated here. The first target information may be presented in another manner. In one example, the terminal 101 and another client are both in session A. In one example, the another client sends a beer emoji to the session A, the terminal 101 sends the identical beer emoji immediately, and the first target interaction information corresponding to the two beer emojis is presented in the terminal 101, which displays two beer mugs are cheering. Another example of presenting the first target interaction information is illustrated in terminal 101 in FIG. 6. As shown in FIG. 6, one client sends a heart emoji to session A, the terminal 101 sends the identical heart emoji immediately, and a heart explosion effect is presented in session A in the terminal 101. The embodiment of the present disclosure provides an approach to communication with emojis and further present the interaction between the emojis, which can present pictorial and vivid effects and thus can increase the users' interest to communication with each other.

In some embodiments, a first emoji presentation region for displaying the first emoji set is displayed in response to a trigger instruction or an operation on the emoji select control. In the embodiment illustrated in FIG. 4, in response to triggering the emoji select control 10 (e.g., a click on the emoji select control), the first emoji presentation region 30 for displaying the first emoji set may be displayed. The first emoji presentation region 30 is configured to display emoji in the first emoji set, and the emojis in the first emoji set are emojis corresponding to the target scenario in the information display interface. By taking the Spring Festival scenario as an example of the target scenario, the emojis related to the Spring Festival scenario are displayed on the first emoji presentation region 30. The embodiment of the present disclosure does not limit a carrier of the first emoji presentation region. For example, the carrier may be presented in the form of a tab page over the information display interface. By directly displaying the emoji corresponding to the target scenario, the embodiment of the present disclosure enables the user to directly operate the emoji corresponding to the target scenario in response to triggering the emoji select control, without a need to switch the separate emoji-related tab page, thereby shortening an operation path to the greatest extent, and improving the emoji interaction efficiency.

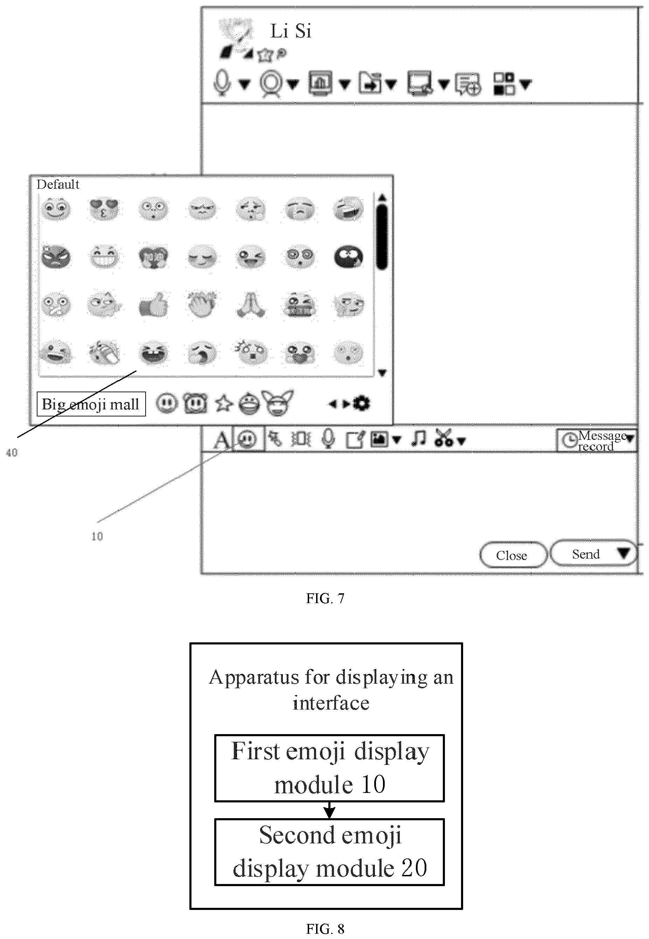

In some embodiments, in the case that the terminal has previously displayed the information display interface with the target element and the information display interface is then closed, the information display interface not including the target element may be displayed in response to a request for displaying the information display interface again. Referring to FIG. 7, FIG. 7 shows a schematic diagram of another information display interface in the terminal 101. Compared with FIG. 4, the target element 20 shown in FIG. 4 is no longer displayed on the information display interface in FIG. 7. The information display interface in FIG. 7 is not configured specifically for the target scenario, which more accords with operating habits of people and is suitable for normal use. The embodiment of the present disclosure can display an information display interface normally presented or the information display interface according with the operating habits of the user for the user after displaying the information display interface carrying the target element for a target scenario, so as to accord with the operating habits of the user to the greatest extent and increase the user stickiness.

In some embodiments, a second emoji presentation region for displaying the second emoji set is displayed in response to a trigger instruction on the emoji select control. In the example illustrated in FIG. 7, the emojis in the second emoji set are emojis corresponding to various scenarios in the information display interface. That is, the emojis in the second emoji set are emojis that can be used by the user in various scenarios, for example, the traditional smile, cry, laugh, cute, tears, good night and other emojis as shown in the second emoji presentation region 40 in FIG. 7. In some embodiments, the second emoji presentation region 40 is an emoji interaction tab page displayed for the user by default before the time period for the target scenario arrives. For example, in the case that the target scenario is the Spring Festival scenario. Prior to the Spring Festival, the emoji interaction tab page in FIG. 7 is displayed for the user by default. Upon the arrival of the Spring Festival, the first emoji presentation region 30 in FIG. 4 is displayed first, and then after the information display interface is exited and is entered again, in response to the emoji select control 10 being triggered again, the second emoji presentation region 40 in FIG. 7 is displayed, and the second emoji presentation region 40 is the emoji interaction tab page displayed for the user by default prior to the Spring Festival. By displaying the default emoji interaction tab page for the user in time, the embodiment of the present disclosure can accord with the operating habits of the user to the greatest extent, and increase the user stickiness.

In the embodiment of the present disclosure, the first emoji set is an emoji set for the target scenario. The first emoji set will not be displayed to the user in the case that the target scenario does not exist, and the second emoji set is a set of emoji that can be used in various scenarios.

The foregoing part of the embodiment of the present disclosure describes the interaction effect generated by two adjacent pieces of emoji information in detail. It should be noted that the presentation of this interaction effect does not affect the presentation of the effect of a single emoji. The presentation of the single emoji effect and the presentation of the interaction effect may be superimposed to further enhance the expressive force of the emoji. Specifically, in response to receiving the first emoji information, the effect of the first emoji is presented, and in response to receiving the second emoji information, the effect of the second emoji is presented.

In some embodiments, the information display interface is an instant messaging interface, and the corresponding emoji effect is displayed in the case that any user sends emoji information in the instant messaging interface. The emoji is the first emoji, the second emoji, or other emoji. In an optional implementation of the embodiment, in the case that a first emoji information in the instant messaging interface is sent, the effect of the first emoji is presented, and in the case that a second emoji information in the instant messaging interface is sent later, the effect of the second emoji is presented first, and the first target interaction information corresponding to the first emoji and the second emoji is presented later.

In some other embodiments, the information display interface is the comment interface of the media resource, and in the case that any user posts a comment carrying an emoji message in the comment interface, the effect of the emoji is presented. The emoji is the first emoji, the second emoji, or another emoji. In the optional implementation of the embodiment, in the case that a comment carrying the information of the first emoji in the comment interface is posted, the effect of the first emoji is presented, and in the case that a comment carrying the information of the second emoji in the comment interface is posted, the effect of the second emoji is presented first, and the first target interaction information corresponding to the first emoji and the second emoji is presented later.

In some embodiments, in the case that the second emoji information is received in an emoji input region of the information display interface, but the second emoji information has not been sent, the first target interaction information may be presented on the information display interface. This presentation does not need to actually send the second emoji information, such that the user can perceive the presentation effect and decide whether to send the second emoji information, which increases the user stickiness.

In some embodiments, in the case that the emoji information in a session corresponding to the information display interface forms the interaction information within a time period where the information display interface is not displayed, presenting the interaction information formed within the time period is presented.

For example, the information display interface corresponds to the session A, the information display interface is not displayed in time interval C, but user 1 and user 2 in the session A within this time period C have a large quantity of conversations, so as to generate a lot of interaction information. The generation manner of the interaction information is the same as the foregoing generation manner of the interaction information, and will not be repeated in detail here. In the case that the information display interface corresponding to the session A in the terminal 101 (corresponding to user 3) is opened, the interaction information generated within the time period C may be presented. In the embodiment of the present disclosure, the interaction information generated in a relevant session within the time period in the case that the information display interface is not displayed can be displayed, thereby reducing missing information and increasing the user stickiness.

In some embodiments, the presenting the interaction information formed within the time period includes: presenting the interaction information sequentially according to generation time points of the interaction information in the case that an amount of the interaction information is less than a first preset amount; and determining the first preset amount of the interaction information as an amount to be presented according to the generation time points of the interaction information in the case that the amount of the interaction information is greater than or equal to the first preset amount and presenting the first preset amount of the interaction information sequentially. The embodiment of the present disclosure does not limit a specific value of the first preset amount. The embodiment of the present disclosure does not limit the method for determining the first preset amount of interaction information. For example, the interaction information may be ranked in a descending order based on the generation time points, the interaction information with the later generation time point is ranked higher, and the first preset amount of interaction information are sequentially presented accordingly.

By taking 10 pieces of interaction information generated within the time period C as an example, the first preset amount may be set to 3. Because the amount of interaction information is 10 and is greater than 3, only the 3 pieces of interaction information recently generated on the time dimension are sequentially presented based on a generation order. By taking 2 pieces of interaction information generated within the time period C as an example. Because the amount of interaction information is 2 and is less than the first present amount 3, the 2 pieces of interaction information are both presented based on the generation order. In the embodiment of the present disclosure, the presentation amount/quantity of the interaction information is controlled, so as to avoid the influence on other operations performed by the user due to long presentation time, improve the user experience, and increase the user stickiness.

In some embodiment, the method further includes the following processes S100-S300.

In S100, in the case that the second emoji information is displayed, third emoji information is displayed.

The relevant description of display of the third emoji information can refer to the part of receiving the second emoji information in S20, which will not be repeated.

In S200, in response to second target interaction information being determined based on the second emoji information and the third emoji information and the first target interaction information not being presented completely, the first target interaction information and the second target interaction information are sequentially stored in a successive interaction information sequence according to a time sequence.

The method for determining the second target interaction information is the same with the method for determining the first target interaction information, and both methods determine the corresponding interaction information based on two adjacent pieces of emoji information, which will not be repeated here. In the case that the first target interaction information has not been presented completely during the generation of the second target interaction information, it is considered that the second target interaction information and the first target interaction information form the successive interaction information, and the first target interaction information and the second target interaction information may be sequentially stored in the successive interaction information sequence based on the time sequence. As the information display interface receives more emoji information, the successive interaction information sequence may be further grown. For example, in the case that third target interaction information is further generated, and when the third target interaction information is generated, the interaction information generated prior to the third target interaction information is not completely presented, the third target interaction information is stored in the successive interaction information sequence. Certainly, in the case that certain interaction information in the successive interaction information sequence is presented completely, the interaction information may also be deleted from the successive interaction information sequence.

In S300, the interaction information in the successive interaction information sequence is sequentially presented.

In the present embodiment of the present disclosure, the interaction information may be presented in sequence, that is, another interaction information is presented in the case that the previous interaction information is presented completely. This presentation manner avoids the loss of presentation effect caused by superposition presentation, and ensures the integrity of the presentation effect.

In some embodiments, in response to the case that no new emoji information is received within a target time period, and more than a second preset amount of interaction information is present in the successive interaction information sequence, only the second preset amount of interaction information stored in the successive interaction information sequence are sequentially presented. The embodiment of the present disclosure does not limit the method for determining the second preset amount of interaction information. For example, the interaction information is ranked in a descending order according to a storage time, and the previous second preset amount of interaction information in a sorting result are presented in sequence. The target time period is configured to determine a target time duration, which is a time period ending with the current time point and the length of time is equal to the target time period, and no new emoji information is received within the target time period, indicating that no new emoji information has been received for the target time period prior to the current time point. The embodiment of the present disclosure does not limit a length of the target time period and a value of the second preset amount, the length of the target time period and the value of the second preset amount is manually set. For example, the target time period is 5 seconds and the second preset amount is 3. In the case that no new emoji information is received within 5 seconds, the successive interaction information sequence may be viewed. In the case that the successive interaction information sequence includes more than 3 pieces of interaction information, only the 3 most recently generated interaction information on the time dimension are presented. Certainly, in the case that the quantity of interaction information in the successive interaction information sequence is less than or equal to the second preset amount, all the interaction information in the successive interaction information sequence are directly presented in sequence. This presentation manner can avoid the situation that the presentation of the interaction information spends a lot of time in response to frequently receiving the emoji, save time and cost, and improve the user experience.

In some embodiments, the emoji tab page in the information display interface can be adjusted according to user needs, and the method for presenting the emoji region in the embodiment of the present disclosure can also be applied to different users in batches, which is not limited by the embodiment of the present disclosure. In the case that the information display interface supports the tab page, the tab page can present more emoji to the user by sliding left and right. The presentation of the interaction information in the present embodiment of the present disclosure does not affect normal operations of the user for the information display interface. That is, during the presentation of the interaction information, the information display interface can still receive instructions from the user, and in the case that the user exits the information display interface, the presentation of the interaction information is also stopped.

In some embodiments, the method further includes: presentinginteraction information in a successive interaction information sequence sequentially in response to displaying the information display interface. The interaction information is stored sequentially according to a time sequence in the successive interaction information sequence, and the stored interaction information is formed within a time period where the information display interface is not displayed.

During the time interval when the current terminal does not display the information display interface, other terminals may post emoji on the information display interface, such as sending emoji in the instant messaging interface or posting comments with emoji in the comment interface of the media resource. Then the interaction information corresponding to the adjacent emojis are supposed to be presented, however, because the current terminal does not display the information display interface during the time interval, the interaction information cannot be presented. In this situation, the interaction information is first stored in the sequence of successive interaction information, and in the case that multiple interaction information is formed, the multiple interaction information is stored sequentially. Then, when the current terminal displays the information display interface, the stored interaction information in the successive interaction information sequence can be presented based on the successive interaction information sequence, such that the user corresponding to the current terminal can review the interaction effect formed in the information display interface.

FIG. 8 is a block diagram of an apparatus for displaying an interface according to an exemplary embodiment, and the apparatus includes:
a first emoji display module 10, configured to display first emoji information on an information display interface, the first emoji information including an image and/or description corresponding to a first emoji; and
a second emoji display module 20, configured to present a second emoji on the information display interface in the case that the first emoji information is displayed on the information display interface and second emoji information is acquired, the second emoji information including an image and/or description corresponding to the second emoji.

In some embodiments, the information display interface is a comment interface of a media resource, the second emoji display module is configured to present the second emoji in the case that the first emoji information is displayed on the information display interface and one or more comments displayed on the comment interface of the media resource includes the second emoji information.

In some embodiments, the information display interface is an instant messaging interface, the second emoji display module is configured to present the second emoji in the case that the first emoji information and the second emoji information is displayed on the instant messaging interface.

In some embodiments, the apparatus further includes an interaction presentation module, configured to present first target interaction information on the information display interface, the first target interaction information being configured to describe an interaction effect between the first emoji and the second emoji.

In some embodiments, each of the first emoji and the second emoji is an emoji in a first emoji set, the first emoji set corresponding to a target scenario, and the first target interaction information describes the interaction effect between the first emoji and the second emoji in the target scenario.

In some possible embodiments, the first emoji set includes a second emoji set, a combination formed by any two emojis from the second emoji set having corresponding interaction information, and the interaction presentation module is further configured to:
determine, in the case that each of the first emoji and the second emoji is an emoji in the second emoji set, interaction information corresponding to a combination of the first emoji and the second emoji as the first target interaction information.

In some embodiments, the first emoji set includes a third emoji set, a combination formed by any two emojis from the third emoji set according to a display order having corresponding interaction information, and the interaction presentation module is further configured to:
determine, in the case that each of the first emoji and the second emoji is an emoji in the third emoji set, and the first emoji information and the second emoji information are sent by different clients, the interaction information corresponding to a combination formed by the first emoji and the second emoji according to the display order as the first target interaction information.

In some embodiments, the first emoji set comprises a second emoji set, a combination formed by any two emojis from the second emoji set having corresponding interaction information, the interaction presentation module is further configured to:
determine, in the case that each of the first emoji and the second emoji is an emoji in the second emoji set and the first emoji information and the second emoji information are sent from different clients, the first target interaction information based on the first emoji and the second emoji.

In some embodiments, the first emoji display module is further configured to present, in response to receiving the first emoji information, an effect of the first emoji, and present, in response to receiving the second emoji information, an effect of the second emoji.

In some embodiments, the interaction presentation module is further configured to present the first target interaction information on the information display interface in the case that the second emoji information is displayed in an emoji input region of the information display interface but the second emoji information is not sent.

In some embodiments, the interaction presentation module is further configured to display the information display interface; and in the case that the emoji information in a session corresponding to the information display interface forms the interaction information within a time period where the information display interface is not displayed, present the interaction information formed within the time period.

In some embodiments, the interaction presentation module is further configured to present the interaction information sequentially according to generation time points of the interaction information in the case that an amount of the interaction information is less than a first amount; and determine the first amount of the interaction information according to the generation time points of the interaction information in the case that the amount of the interaction information is greater than or equal to the first amount and present the first amount of interaction information sequentially.

In some embodiments, the interaction presentation module is further configured to display a third emoji in the case that the second emoji information is displayed; and in the case that second target interaction information is determined based on the second emoji information and the third emoji information and the first target interaction information is not presented completely, storing the first target interaction information and the second target interaction information sequentially in a successive interaction information sequence sequentially according to a time sequence; and present the interaction information in the successive interaction information sequence sequentially.

In some embodiments, the interaction presentation module is further configured to present the second quantity of interaction information stored in the successive interaction information sequence sequentially in the case that new emoji information is not received within a previous target time period, and the successive interaction information sequence including more than a second quantity of interaction information.

In some embodiments, the apparatus further include an interface display control module, configured to display the information display interface, the information display interface including an emoji select control; display a target element on the emoji select control, the target element being configured to prompt presence of the target scenario; and display a first emoji presentation region for displaying the first emoji set in response to a trigger instruction on the emoji select control; and/or display the information display interface not including the element in response to a request for displaying the information display interface again in the case that the information display interface is closed.

In some embodiments, the interface display control module is configured to display a second emoji presentation region for displaying the second emoji set in response to the trigger instruction on the emoji select control.

In some embodiments, the interface display control module is further configured to present the first target interaction information in the case that the first emoji information and the second emoji information are adjacent emoji information. The first emoji information is sent from other clients, and the second emoji information is input in a terminal; or the first emoji information and the second emoji information are sent from at least one client, and the client that sends the first emoji information and the second emoji information is different from the terminal

In some embodiments, the interface display control module is further configured to present interaction information in a successive interaction information sequence sequentially in response to displaying the information display interface. The interaction information is stored sequentially according to a time sequence in the successive interaction information sequence, and the stored interaction information is formed within a time period where the information display interface is not displayed.

In some embodiments, the first target interaction information includes at least one of animation information and sound information.

Regarding the apparatus in the embodiment, the specific manner in which each module performs the operation has been described in detail in the method embodiments, and will not be described in detail here.

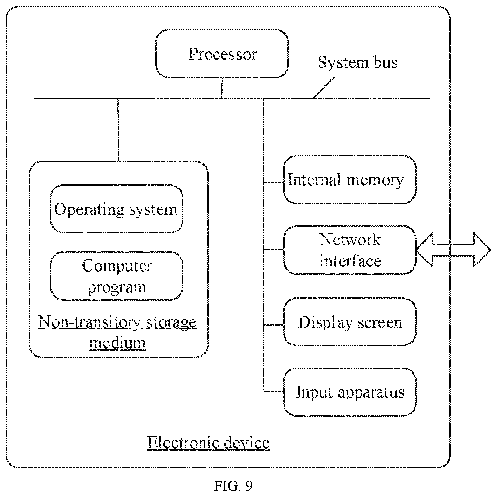

FIG. 9 is a block diagram of an electronic device 600 for displaying an interface according to an exemplary embodiment.

The electronic device is a server or a terminal device, and an internal structural diagram of the electronic device may be as shown in FIG. 9. The electronic device includes a processor, a memory, and a network interface which are connected by a system bus. The processor of the electronic device is configured to provide computing and control capabilities. The memory of the electronic device includes a non-volatile storage medium and an internal memory. The non-volatile storage medium stores an operating system and one or more computer programs. The internal memory provides an environment for the operation of the operating system and the one or more computer programs in the non-volatile storage medium. The network interface of the electronic device is configured to communicate with an external terminal through network connection. The processor, when loading and running the one or more computer programs, causes the electronic device to perform the method for displaying an interface.

It can be understood by those skilled in the art that the structure shown in FIG. 9 is only a block diagram of part of structure related to the solution of the present disclosure, and does not constitute a limitation on the electronic device to which the solution of the present disclosure is applied. The specific electronic device can include more or fewer components than shown in the figures, or combine certain components, or have a different arrangement of components.

In an exemplary embodiment, an electronic device is also provided, including a processor; and a memory configured to store one or more instructions executable by the processor. The processor, when loading and executing the one or more instructions, is configured to perform the method for displaying an interface in the embodiments of the present disclosure.

In an exemplary embodiment, a non-transitory computer-readable storage medium is also provided, and one or more instructions are stored in the non-transitory computer-readable storage medium, and a processor of an electronic device, when loading and executing the one or more instructions, causes the electronic device to perform the method for displaying an interface in the embodiments of the present disclosure.

In an exemplary embodiment, a computer program product is also provided, the computer program product includes one or more computer programs, the one or more computer programs are stored in a non-transitory readable storage medium, and at least one processor of the computer device, when loading and running the one or more computer programs from the non-transitory computer readable storage medium, causes the computer device to perform the method for displaying an interface according to the embodiments of the present disclosure.

Those ordinary skilled in the art may understand that all or part of the processes in the method of the above embodiments may be implemented by instructing the relevant hardware through a computer program, the computer program may be stored in a non-transitory computer readable storage medium, and when executed, the computer program can include the processes of the above method embodiments. Any reference to the memory, storage, database or other mediums used in the various embodiments according to the present disclosure may include a non-transitory and/or a transitory memory. The non- transitory memory may include a read only memory (ROM), a programmable ROM (PROM), an electrically programmable ROM (EPROM), an electrically erasable programmable ROM (EEPROM), or a flash memory. The transitory memory may include a random-access memory (RAM) or an external cache memory. By way of illustration instead of limitation, the RAM is available in various forms such as a static RAM (SRAM), a dynamic RAM (DRAM), a synchronous DRAM (SDRAM), a double data rate SDRAM (DDRSDRAM), an enhanced SDRAM (ESDRAM), a synchronous link (Synchlink) DRAM (SLDRAM), a memory bus (Rambus) direct RAM (RDRAM), a direct memory bus dynamic RAM (DRDRAM), a memory bus dynamic RAM (RDRAM), etc.

Other embodiments of the present disclosure will be readily conceivable for those skilled in the art upon consideration of the description and practice of the disclosure disclosed herein. The present disclosure is intended to cover any variations, uses, or adaptive changes of the present disclosure. These variations, uses, or adaptive changes follow general principles of the present disclosure and include common general knowledge or conventional technical means in the art not disclosed by the present disclosure. The description and embodiments are to be regarded as exemplary only, with the true scope and spirit of the present disclosure being indicated by the following claims.

It is to be understood that the present disclosure is not limited to the precise structures described above and illustrated in the accompanying drawings, and that various modifications and changes may be made without departing from the scope thereof. The scope of the present disclosure is limited only by the appended claims.

All embodiments of the present disclosure may be performed alone or in combination with other embodiments, all of which are considered to be within the scope of protection claimed by the present disclosure.

## Claims

1. A method for displaying an interface, applicable to a terminal, comprising:
displaying (S10) first emoji information on an information display interface, wherein the first emoji information comprises an image and/or a description corresponding to a first emoji; and
presenting (S20) a second emoji on the information display interface in response to the first emoji information being displayed on the information display interface and second emoji information being acquired, wherein the second emoji information comprises an image and/or a description corresponding to the second emoji.

2. The method according to claim 1, wherein the information display interface is a comment interface of a media resource; and
said presenting the second emoji on the information display interface comprises: presenting the second emoji in response to the first emoji information being displayed on the information display interface and one or more comments displayed on the comment interface of the media resource comprising the second emoji information; or
wherein the information display interface is an instant messaging interface; and said presenting the second emoji on the information display interface comprises: presenting the second emoji in response to the first emoji information and the second emoji information being displayed on the instant messaging interface.

3. The method according to claim 1 or 2, further comprising:
presenting first target interaction information on the information display interface, wherein the first target interaction information describes an interaction effect between the first emoji and the second emoji.

4. The method according to claim 3, wherein each of the first emoji and the second emoji is an emoji in a first emoji set, the first emoji set corresponding to a target scenario; and the first target interaction information describes the interaction effect between the first emoji and the second emoji in the target scenario;
wherein the first emoji set comprises a second emoji set, and a combination formed by any two emojis from the second emoji set has corresponding interaction information and the combination is formed without considering a display order of the first emoji and the second emoji; and the method further comprises: in response to each of the first emoji and the second emoji being emojis in the second emoji set, determining interaction information corresponding to the combination of the first emoji and the second emoji as the first target interaction information; or
wherein the first emoji set comprises a third emoji set, and a combination formed by any two emojis from the third emoji set has corresponding interaction information and is formed by considering a display order of the first emoji and the second emoji; and the method further comprises: in response to the first emoji and the second emoji being emojis in the third emoji set, determining interaction information corresponding to the combination formed by the first emoji and the second emoji as the first target interaction information, wherein the first emoji information and the second emoji information are sent from different clients.

5. The method according to claim 3, wherein the first emoji set comprises a second emoji set, and a combination formed by any two emojis from the second emoji set has corresponding interaction information and the combination is formed without considering a display order of the first emoji and the second emoji; and the method further comprises:
in response to the first emoji and the second emoji being emojis in the second emoji set, determining the first target interaction information based on the first emoji and the second emoji, and the first emoji information and the second emoji information are sent from different clients,

6. The method according to any one of claims 1 to 5, further comprising:
presenting an effect of the first emoji in response to receiving the first emoji information; and
presenting an effect of the second emoji in response to receiving the second emoji information.

7. The method according to any one of claims 3 to 6, wherein said presenting the first target interaction information on the information display interface comprises:
presenting the first target interaction information on the information display interface in response to the second emoji information being displayed in an emoji input region of the information display interface while the second emoji information not being sent from the terminal to another client.

8. The method according to any one of claims 3 to 7, further comprising:
displaying the information display interface; and
in the case that emoji information in a session corresponding to the information display interface forms interaction information within a time period when the information display interface is not displayed, presenting the interaction information formed within the time period.

9. The method according to claim 8, wherein said presenting the interaction information formed within the time period comprises:
in response to an amount of the interaction information being less than a first preset amount, presenting the amount of interaction information sequentially according to generation time points of the interaction information; and
in response to an amount of the interaction information being greater than or equal to the first preset amount, determining the first preset amount of the interaction information as an amount of the interaction information to be presented according to the generation time points of the interaction information, and presenting the first amount of the interaction information sequentially.

10. The method according to any one of claims 3 to 9, further comprising:
displaying third emoji information in response to the second emoji information being displayed;
in response to second target interaction information being determined based on the second emoji information and the third emoji information, and the first target interaction information not being presented completely, storing the first target interaction information and the second target interaction information in a successive interaction information sequence according to a time sequence; and
presenting the first target interaction information and the second target interaction information in the successive interaction information sequence.

11. The method according to claim 10, further comprising:
in response to new emoji information being not received within a previous target time period and the successive interaction information sequence comprising more than a second preset quantity of interaction information, presenting sequentially the second preset quantity of interaction information stored in the successive interaction information sequence.

12. The method according to any one of claims 3 to 11, further comprising:
providing an emoji select control in the information display interface;
displaying a target element on the emoji select control, wherein the target element is configured to prompt presence of the target scenario; and
displaying a first emoji presentation region for displaying the first emoji set in response to an operation on the emoji select control; and/or displaying the information display interface without the target element in response to a request for displaying the information display interface again after the information display interface is closed.

13. The method according to claim 12, further comprising:
displaying a second emoji presentation region for displaying the second emoji set in response to the operation on the emoji select control.

14. An apparatus for displaying an interface, comprising:
a first emoji display module (10), configured to display first emoji information on an information display interface, wherein the first emoji information comprises an image and/or a description corresponding to a first emoji; and
a second emoji display module (20), configured to present a second emoji on the information display interface in response to the first emoji information being displayed on the information display interface and second emoji information is acquired, wherein the second emoji information comprises an image and/or a description corresponding to the second emoji.

15. A non-transitory computer-readable storage medium storing one or more instructions therein, wherein the one or more instructions, when loaded and executed by a processor of an electronic device, cause the electronic device to perform:
displaying first emoji information on an information display interface, wherein the first emoji information comprises an image and/or a description corresponding to a first emoji; and
presenting a second emoji on the information display interface in response to the first emoji information being displayed on the information display interface and second emoji information being acquired, wherein the second emoji information comprises an image and/or a description corresponding to the second emoji.
